# EUROPÄISCHE PATENTSCHRIFT

(11) **EP 2 357 524 B1**
(45) Veröffentlichungstag und Bekanntmachung des Hinweises auf die Patenterteilung: **30.03.2016**
(21) Anmeldenummer: 11000371.2
(22) Anmeldetag: 19.01.2011
(51) Int. Cl.: G03B 9/10

(54) **Blendenlamelle mit Tragvorrichtung**
Diaphragm blade with carrying device
Lamelle à écrans dotée d'un dispositif de support

(30) Priorität: 24.01.2010 DE 102010005449
(43) Veröffentlichungstag der Anmeldung: 17.08.2011
(73) Patentinhaber: Leica Camera AG, 35606 Solms (DE)
(72) Erfinder: Aab, Konstantin, 34295 Edermünde-Grifte (DE); Drucker, Michael Peter, 35580 Wetzlar (DE)
(74) Vertreter: Stamer, Harald

(56) Entgegenhaltungen:
- DE-A1- 2 251 758
- DE-A1- 19 906 017
- DE-A1- 19 955 984
- DE-A1-102009 020 287
- DE-C- 969 694
- GB-A- 1 036 974
- US-A- 2 593 873

## Beschreibung

Die Erfindung betrifft eine sichelförmige Blendenlamelle mit einer ein Sichelende flächig tragenden Tragvorrichtung.

Sichelförmige Blendenlamelle oder Sektorenblenden werden vorzugsweise in Verschlüsse für fotografische Zwecke, insbesondere in Zentralverschlüsse eingesetzt.

Aus DE 2 251 758 ist ein fotografischer Zentralverschluss bekannt, bei dem auf einem ringförmigen Lamellenträger kreissymmetrisch verteilt mehrere Bolzen als Drehlager für die Verschlußlamellen angeordnet sind. Die Verschlußlamellen sind mit einer Lochung versehen, um sie auf die Bolzen auflegen zu können. Zusätzlich enthalten die Verschlußlamellen ein in radialer Richtung vom Drehlager beabstandetes Loch, in das ein auf einem Antriebsring befestigter Bolzen eingreift. Über ein motorisch angetriebenes Hebelwerk kann der Antriebsring vor- und zurück gestellt werden, wodurch die Verschlußlamellen in die Verschlußöffnung des Zentralverschlusses hinein und aus dieser heraus bewegt werden.

Die bei der Beschleunigung der Verschlußlamellen auf die Antriebslöcher und die Drehlager wirkenden Kräfte sind groß und führen zu einem frühen Verschleiß und zu relativ lauten Geräuschen. Bei einer Vergrößerung der Verschlußöffnung und daran angepassten längeren Lamellenblättern werden die Beschleunigungskräfte überproportional größer und führen zu einem Flattern der Spitzen der in der Regel sehr dünnen Lamellenblätter. Durch Anschlagstöße der Blendenlamellen in der Offen- bzw. Geschlossenstellung werden die Lochungen im Lamellenblatt zusätzlich belastet.

Aus der älteren Patentanmeldung der Anmelderin 10 2009 020 287.0 ist eine Anordnung bekannt, bei der die Blendenlamellen von einem Schwenkarm getragen werden, der auf die Drehlagerbolzen aufgesetzt ist. Die Ausrichtung der Längserstreckung der Blendenlamellen zum Schwenkarm erfolgt durch auf beiden Teilen vorgesehenen Nietösen.

Die Schwenkarme sind vorzugsweise topfförmig mit einem stegförmigen Rand ausgebildet. Der zur Verschlußlamelle weisende Topfboden des Schwenkarmes ist mit dem Lamellenblatt flächig verbunden. Der Antrieb der Blendenlamelle erfolgt durch Kontakt mit dem äußeren stegförmigen Rand des topfförmigen Schwenkarmes. Durch die flächige Verbindung des Lamellenblattes mit dem Schwenkarm wird einerseits eine größere Steifigkeit der dünnen Lamellenblätter erreicht. Durch den Antrieb und die Lagerung der Blendenlamellen über den Schwenkarm wird andererseits das Lamellenblatt von mechanischen Schub- und Zugkräften entkoppelt. Beim Dauerbetrieb einer solchen Blendenlamelle hat sich jedoch ergeben, dass die flächige Steifigkeit des Lamellenblattes insbesondere bei kurzen Verschlußzeiten, d.h. schnellen Schwenkbewegungen der Blendenlamellen und großen zu überdeckenden Verschlußöffnungen noch nicht ausreichend ist.

Der Erfindung lag daher die Aufgabe zugrunde, eine Konstruktion der Blendenlamellen anzugeben, die eine gesteigerte Flächensteifigkeit insbesondere bei schnellen Schwenkbewegungen ergibt.

Diese Aufgabe wird erfindungsgemäß bei den eingangs genannten Blendenlamellen durch eine ein Sichelende flächig einspannende Tragvorrichtung erreicht, wobei die Tragvorrichtung aus einem oberen und einem unteren Element besteht, an denen zueinander fluchtend und senkrecht zur Lamellenebene stehend zwei Lagerachsen angebracht sind.

Das obere und das untere Einspannelement können flache Kunststoffscheiben sein, an denen zueinander fluchtend noch oben und unten weisende Lagerachsen angeformt sind. Das ermöglicht eine zweiseitige Drehlagerung der Blendenlamellen, so dass die bei einer einseitigen Drehlagerung möglichen Kippmomente und daraus resultierende Flatterbewegungen der freien Sichelenden vermieden werden.
ie Lagerachsen können als Bolzen oder Hohlachsen ausgebildet sein, die in Lagerbohrungen oder Lagerzapfen auf Lamellentragringen einsetzbar sind. Selbstverständlich können die obere und untere Lagerachse auch unterschiedlich sein, wobei die Lager in den Lamellentragringen entsprechend anzupassen sind. Das obere und/oder untere Einspannelement können auch auf das Lamellenblatt aufgespritzt sein.

In einer vorteilhaften Ausgestaltung kann die Lagerachse an dem einen Einspannelement als Hohlachse und an dem weiteren Einspannelement als Bolzen auf beiden Seiten dieses Elementes ausgebildet sein, so dass im Einspannzustand der Blendenlamelle der Bolzen durch eine Bohrung im Lamellenblatt hindurch in die Hohlachse einsetzbar ist.

Mit Vorteil kann das eine Einspannelement wie der aus der älteren Patentanmeldung bekannte Schwenkarm ausgebildet sein, wobei der topfförmige Teil eine Hohlachse aufweist. Dieses Einspannelement kann als unteres Element vorgesehen sein und weiterhin als Schwenkarm benutzt werden.

Zur einfacheren Montage und gegenseitigen Ausrichtung des Lamellenblattes mit den Einspannelementen kann das eine Element mit einem das einzuspannende Sichelende teilweise umschließenden Steg versehen sein, in den auch das weitere Einspannelement als Deckel formschlüssig einlegbar ist. Das eingespannte Sichelende ist dann im Einspannbereich gegen seitliche Stöße geschützt. Vorzugsweise wird das topfförmige untere Element auf dem äußeren Topfboden mit dem Steg versehen.

In der Zeichnung ist ein Ausführungsbeispiel der erfindungsgemäßen Blendenlamelle schematisch dargestellt und wird nachfolgend anhand der Figuren näher beschrieben. Dabei zeigen
Fig.1 eine Ansicht schräg von oben im Schnitt,
Fig.2 eine Ansicht schräg von unten im Schnitt,
Fig.3 eine Ansicht der Blendenlamelle schräg von oben und
Fig.4 eine Ansicht der Blendenlamelle schräg von unten.

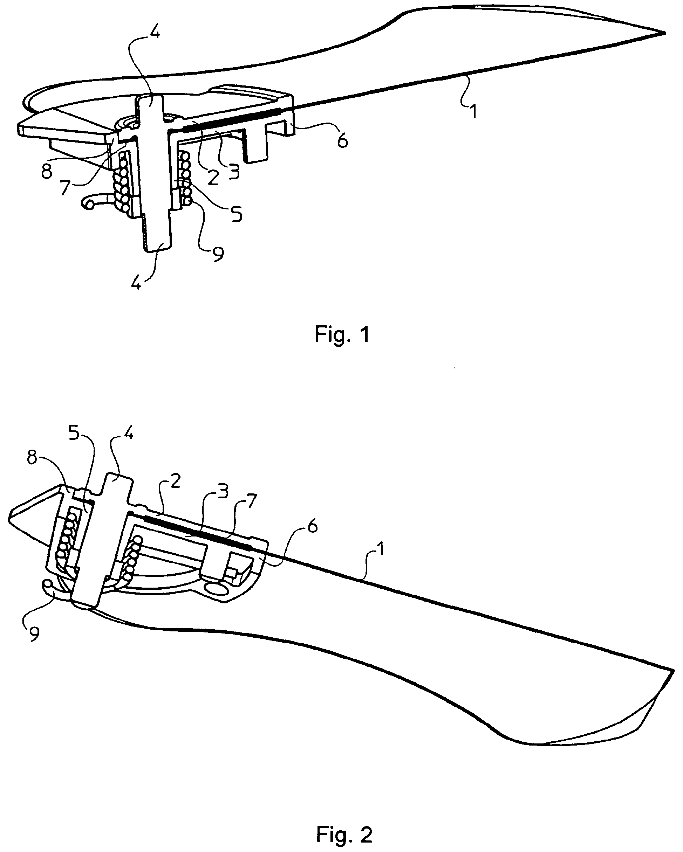

Die in Fig. 1 dargestellte sichelförmige Blendenlamelle mit Tragvorrichtung enthält ein sehr dünnes Lamellenblatt 1, das an seinem einen Ende in eine Tragvorrichtung eingespannt ist. Das Lamellenblatt 1 besteht üblicherweise aus Titan oder einem Kohlefaser-Verbundwerkstoff und ist etwa 0,08 mm dünn. Die mit dem Lamellenblatt verbundene Tragvorrichtung besteht aus einem oberen Element 2 und einem unteren Element 3. Das obere Element 2 weist einen nach oben stehenden Bolzen 4 auf, der nach unten verlängert ist.

Das untere Element 3 enthält eine nach unten weisende Hohlachse 5, in die das nach unten verlängerte Ende des Bolzens 4 so eingesetzt ist, dass es aus der Hohlachse 5 hervorsteht. Die freien Enden des Bolzens 4 werden in nicht dargestellte Lager auf einem Lamellentragring eingesetzt.

Das untere Element 3 ist topfförmig mit einem Topfrand 6 ausgebildet, der dem unteren Element 3 zusätzliche Verwindungssteifigkeit verleiht. Auf den äußeren Topfboden 7 ist das Lamellenblatt 1 aufgelegt. Der äußere Topfboden 7 ist teilweise von einem Steg 8 umgeben. Der Steg 8 ist so hoch, dass auch das obere Element 2 formschlüssig eingelegt werden kann. In dem in Fig. 1 dargestellten Montagezustand der Blendenlamelle sind das Lamellenblatt 1 das obere Element 2 und das untere Element 3 durch Pressen miteinander verklebt oder verschweißt. Das obere Element 2 und das untere Element 3 sind aus einem geeigneten leichten Kunststoff gefertigt.

Fig. 2 verdeutlicht die topfförmige Ausbildung des unteren Elementes 3. Die Außenfläche des Topfrandes 6 kann als Angriffsfläche zu Auslösung einer Schwenkbewegung der Blendenlamelle genutzt werden. Andere Teile der Fläche können als Anschlag für federnde Begrenzungen der Schwenkbewegung genutzt werden. Die auf die Hohlachse 5 aufgesetzte Spiralfeder 9 wird bei geeigneter Befestigung ihres freien Endes auf dem nicht dargestellten Lamellenträger bei Ausschwenken der Blendenlamelle gespannt und bewirkt nach dem Ausschwenken der Blendenlamelle eine Rückstellung in die Ruheposition.

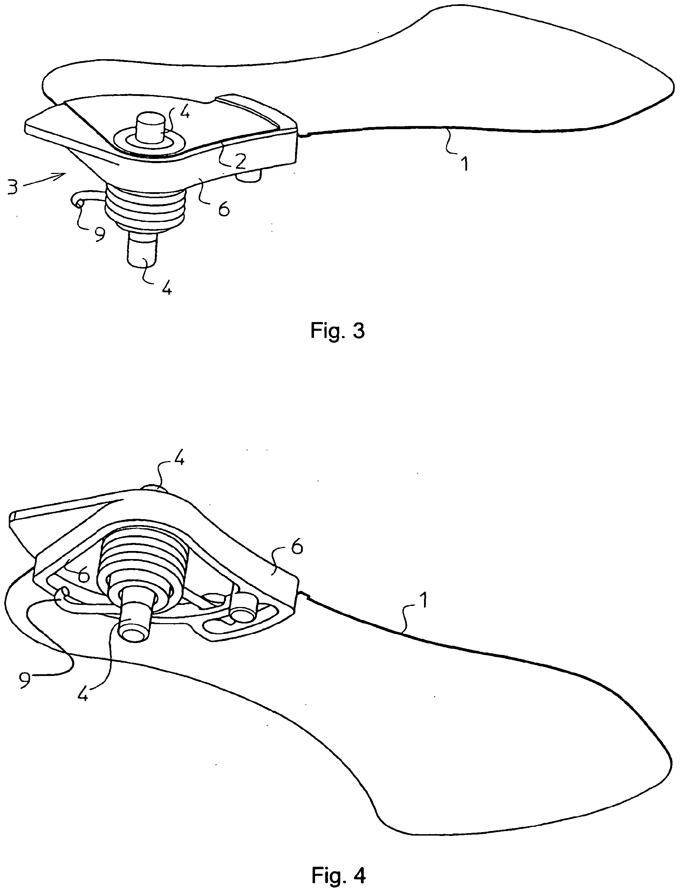

Aus der in Fig. 3 dargestellten Ansicht ist zu entnehmen, dass das eingespannte Ende des sichelförmigen Lamellenblattes 1 von der Tragvorrichtung vollständig eingeschlossen und gegen seitliche Anschlagstöße geschützt ist.

Aus der in Fig. 4 dargestellten Ansicht ist die geschlossene topfförmige Struktur des unteren Elementes 3 zu entnehmen, die die formstabile Ausführung der gesamten Tragvorrichtung gewährleistet.

### Bezugszeichenliste

- 1: Lamellenblatt
- 2: oberes Element
- 3: unteres Element
- 4: Bolzen
- 5: Hohlachse
- 6: Topfrand
- 7: äußerer Topfboden
- 8: Steg am äußeren Topfboden
- 9: Spiralfeder

## Patentansprüche

1. Sichelförmige Blendenlamelle mit einer ein Sichelende flächig einspannenden Tragvorrichtung, wobei die Tragvorrichtung aus einem oberen Element (2) und einem unteren Element (3) besteht, an denen zueinander fluchtend und senkrecht zur Lamellenebene stehend zwei Lagerachsen (4, 5) angeformt sind.

2. Sichelförmige Blendenlamelle nach Anspruch 1, **dadurch gekennzeichnet, dass** die Lagerachsen als Hohlachsen (5) ausgebildet sind.

3. Sichelförmige Blendenlamelle nach Anspruch 1, **dadurch gekennzeichnet, dass** die Lagerachsen als Bolzen (4) ausgebildet sind.

4. Sichelförmige Blendenlamelle nach Anspruch 1, **dadurch gekennzeichnet, dass** die Lagerachse auf dem einen Element (3) als Hohlachse (5) und auf dem anderen Element (2) als Bolzen (4) auf beiden Seiten dieses Elementes (2) ausgebildet ist, so dass im Einspannzustand der Blendenlamelle der Bolzen (4) durch eine Bohrung in der Blendenlamelle hindurch in die Hohlachse (5) einsetzbar ist.

5. Sichelförmige Blendenlamelle nach Anspruch 4, **dadurch gekennzeichnet, dass** die Hohlachse (5) am unteren Element (3) und der Bolzen (4) am oberen Element (2) angeordnet sind.

6. Sichelförmige Blendenlamelle nach Anspruch 1, **dadurch gekennzeichnet, dass** das untere Element (3) topfförmig mit umlaufendem Topfrand (6) ausgebildet ist, wobei der äußere Topfboden (7) die Einspannfläche bildet.

7. Sichelförmige Blendenlamelle nach Anspruch 6, **dadurch gekennzeichnet, dass** das obere Element (2) als flache Scheibe mit an den äußeren Topfboden (7) angepasster Form ausgebildet ist.

8. Sichelförmige Blendenlamelle nach den Ansprüchen 6 und 7, **dadurch gekennzeichnet, dass** der äußere Topfboden (7) des unteren Elementes (3) und das obere Element (2) mit dem eingespannten Lamellenblatt (1) verklebt sind.

9. Sichelförmige Blendenlamelle nach Anspruch (8), **dadurch gekennzeichnet, dass** der äußere Rand des eingespannten Lamellenblattes (1) von einem Steg (8) am Umfang des äußeren Topfbodens (7) formschlüssig eingefasst ist und das obere Element (2) ebenfalls in diesen Fassungsbereich einsetzbar ist.

## Claims

1. Crescent-shaped diaphragm blade having a carrier device that clamps one crescent end in a planar manner, wherein the carrier device consists of an upper element (2) and a lower element (3) on which two bearing axles (4, 5) that are aligned with one another and are perpendicular to the blade plane are integrally formed.

2. Crescent-shaped diaphragm blade according to Claim 1, **characterized in that** the bearing axles are configured as hollow axles (5).

3. Crescent-shaped diaphragm blade according to Claim 1, **characterized in that** the bearing axles are configured as pins (4).

4. Crescent-shaped diaphragm blade according to Claim 1, **characterized in that** the bearing axle on one element (3) is configured as a hollow axle (5) and the bearing axle on the other element (2) is configured as a pin (4) on both sides of this element (2) such that, in the clamped state of the diaphragm blade, the pin (4) is insertable into the hollow axle (5) through a hole in the diaphragm blade.

5. Crescent-shaped diaphragm blade according to Claim 4, **characterized in that** the hollow axle (5) is arranged on the lower element (3) and the pin (4) is arranged on the upper element (2).

6. Crescent-shaped diaphragm blade according to Claim 1, **characterized in that** the lower element (3) is configured in a cup-like manner with an encircling cup edge (6), wherein the outer cup base (7) forms the clamping face.

7. Crescent-shaped diaphragm blade according to Claim 6, **characterized in that** the upper element (2) is configured as a flat plate having a shape adapted to the outer cup base (7).

8. Crescent-shaped diaphragm blade according to Claims 6 and 7, **characterized in that** the outer cup base (7) of the lower element (3) and the upper element (2) are adhesively bonded to the clamped blade (1).

9. Crescent-shaped diaphragm blade according to Claim 8, **characterized in that** the outer edge of the clamped blade (1) is enclosed in a form-fitting manner by a web (8) at the circumference of the outer cup base (7), and the upper element (2) is likewise insertable into this mounting region.

## Revendications

1. Lamelle de diaphragme falciforme, comprenant un dispositif porteur serrant à plat une extrémité de faucille, le dispositif porteur se composant d'un élément supérieur (2) et d'un élément inférieur (3), au niveau desquels sont façonnés deux axes de support (4, 5) perpendiculaires au plan de la lamelle et en alignement l'un avec l'autre.

2. Lamelle de diaphragme falciforme selon la revendication 1, **caractérisée en ce que** les axes de support sont réalisés sous forme d'axes creux (5).

3. Lamelle de diaphragme falciforme selon la revendication 1, **caractérisée en ce que** les axes de support sont réalisés sous forme de boulons (4).

4. Lamelle de diaphragme falciforme selon la revendication 1, **caractérisée en ce que** l'axe de palier est réalisé sur l'un des éléments (3) sous forme d'axe creux (5) et sur l'autre élément (2) sous forme de boulon (4) sur les deux côtés de cet élément (2), de telle sorte que dans l'état serré de la lamelle de diaphragme, le boulon (4) puisse être inséré dans l'axe creux (5) par un alésage dans la lamelle de diaphragme.

5. Lamelle de diaphragme falciforme selon la revendication 4, **caractérisée en ce que** l'axe creux (5) est disposé au niveau de l'élément inférieur (3) et le boulon (4) est disposé au niveau de l'élément supérieur (2).

6. Lamelle de diaphragme falciforme selon la revendication 1, **caractérisée en ce que** l'élément inférieur (3) est réalisé en forme de pot avec un bord de pot périphérique (6), le fond extérieur du pot (7) formant la surface de serrage.

7. Lamelle de diaphragme falciforme selon la revendication 6, **caractérisée en ce que** l'élément supérieur (2) est réalisé sous forme de disque plat avec une forme adaptée au fond extérieur du pot (7).

8. Lamelle de diaphragme falciforme selon les revendications 6 et 7, **caractérisée en ce que** le fond extérieur du pot (7) de l'élément inférieur (3) et l'élément supérieur (3) sont collés à la lame de lamelle serrée (1).

9. Lamelle de diaphragme falciforme selon la revendication 8, **caractérisée en ce que** le bord extérieur de la lame de lamelle serrée (1) est enveloppé par engagement par correspondance géométrique par une nervure (8) à la périphérie du fond extérieur du pot (7) et l'élément supérieur (2) peut également être inséré dans cette région d'enveloppement.
